# EUROPÄISCHE PATENTANMELDUNG

(11) **EP 1 353 395 A1**
(43) Veröffentlichungstag der Anmeldung: **15.10.2003**
(21) Anmeldenummer: 02008382.0
(22) Anmeldetag: 12.04.2002
(51) Int. Cl.: H01M 8/24, H01M 8/04, H01M 8/02

(54) **Brennstoffzellenanordnung**

(71) Anmelder: Höller, Stefan, 23558 Lübeck (DE); Küter, Uwe, 23558 Lübeck (DE)
(72) Erfinder: Höller, Stefan, 23558 Lübeck (DE); Küter, Uwe, 23558 Lübeck (DE)
(74) Vertreter: Vollmann, Heiko, Dipl.-Ing.

(57) **Zusammenfassung**

Die Brennstoffzellenanordnung besteht aus zwei Brennstoffzellenstapeln (1 und 2) der PEM-Bauart, die mit Abstand zueinander gegenüberliegend in einem gemeinsamen Gehäuse angeordnet sind. Die für die Sauerstoffzufuhr erforderliche Luft wird in einem teilgeschlossenen Kreislauf geführt, wobei der Luftaustritt innerhalb eines zwischen den Zellstapeln (1, 2) liegenden Freiraums (5) erfolgt. Die Luft wird mittels eines Lüfters über Kanäle (8 und 9) wieder der Einströmseite der Brennstoffzellenstapel (1 und 2) zugeführt. Die notwendige Frischluft wird in den Kreislauf eingespeist, wofür verbrauchte Luft entweicht.

## Beschreibung

Die Erfindung betrifft eine Brennstoffzellenanordnung gemäß den im Oberbegriff des Anspruchs 1 angegebenen Merkmalen.

Für Brennstoffzellenaggregate kleiner und mittlerer Leistung werden heutzutage Brennstoffzellen eingesetzt, welche mit einer gasdichten, aber ionendurchlässigen Polymer-Elektrolytmembran arbeiten. Zu beiden Seiten der Polymer-Elektrolytmembran sind Gasdiffusionselektroden angeordnet, die zur Membran hin mit einem geeigneten Metall, beispielsweise Platin, als Katalysator versehen sind. Diese Gasdiffusionselektroden werden auf ihrer der Membran abgewandten Seite durch eine bipolare Platte oder eine Endplatte abgeschlossen, über welche das Gas, das in der Brennstoffzelle katalytisch oxidiert wird, zugeführt wird. Derartige Brennstoffzellen der PEM-Bauart werden zu mehreren hintereinander angeordnet und zu Brennstoffzellenstapeln verbaut. Dann liegt eine Bipolarplatte jeweils zwischen benachbarten Brennstoffzellen, sie trägt zu einer Seite ein Kanalnetz für die Brennstoffzufuhr der einen Zelle und zur anderen Seite ein Kanalnetz zur Sauerstoffzufuhr der benachbarten Zelle. Innerhalb der Platte kann ein weiteres Kanalnetz zur Kühlung vorgesehen sein. Vom grundsätzlichen Aufbau her sind solche PEM-Brennstoffzellen beispielsweise aus DE 195 44 323 A1 oder DE 199 38 589 A1 bekannt.

Aus derartigen Brennstoffzellen aufgebaute Brennstoffzellenstapel bzw. Stacks zählen ebenfalls zum Stand der Technik. Seitens der Proton Motor GmbH wird unter der Typenbezeichnung HZ40 ein flüssigkeitgekühltes Brennstoffzellenstack mit 5,5 kW Leistung angeboten. Bei diesem Stack erfolgt die Brennstoffzufuhr einerseits und Sauerstoffzufuhr in Form von Luftzufuhr anderseits über zentrale Anschlüsse, die Verteilung innerhalb des Stacks über Kanalsysteme. Um die während des Betriebs entstehende Wärme abzuführen, ist eine Flüssigkeitskühlung vorgesehen, welche ebenfalls über zentrale Anschlüsse und ein innerhalb der Bipolarplatten geführtes Kanalsystem arbeitet.

Ein gewisses Problem beim Betrieb dieses Brennstoffzellenstacks besteht darin, dass einerseits über den Luftanschluss den Zellen ausreichend Sauerstoff zur katalytischen Oxidation zugeführt wird, andererseits über die durchströmende Luft den Zellen nicht zu viel Feuchtigkeit entzogen wird. Dieses Problem stellt sich insbesondere, wenn der Zellenstapel nur mit geringem Druck betrieben wird.

Unter der Typenbezeichnung GZ41 wird von der Proton Motor GmbH ein luftgekühltes 18-kW-Brennstoffzellenaggregat angeboten, das aus vier Brennstoffzellenstacks aufgebaut ist. Die Brennstoffzellenstacks sind gegenüberliegend mit Abstand in einem gemeinsamen Gehäuse angeordnet, der dazwischen gebildete Freiraum dient zur Luftzufuhr. Hierzu ist in einer Gehäusewandung ein Ventilator angeordnet, der von außen Frischluft ansaugt, diese in den Freiraum zwischen den Stacks und somit in die Stacks leitet. Die Luft gelangt durch parallele Kanäle konstanten Querschnitts in den Bipolarplatten zur Außenseite der Stacks, wo sie ins Freie austritt. Bei dieser Ausführungsvariante dient die zugeführte Luft nicht nur zur Deckung des Sauerstoffbedarfs, sondern darüber hinaus auch zur Kühlung des Aggregats.

Das vorgenannte Problem, dass mit dem Luftstrom auch Feuchtigkeit aus den Zellen herausgetragen wird, ergibt sich bei dieser luftgekühlte Variante noch in vermehrtem Maße. Darüber hinaus hat sich gezeigt, dass die Versorgung der einzelnen Brennstoffzellen mit Sauerstoff vermutlich aufgrund sich einstellender Strömungsverhältnisse ungleichmäßig ist.

Vor diesem Hintergrund liegt der Erfindung die Aufgabe zugrunde, eine gattungsgemäße Brennstoffzellenanordnung so auszubilden, dass die vorgenannten Nachteile vermieden, zumindest verringert werden.

Diese Aufgabe wird gemäß der Erfindung durch die in Anspruch 1 angegebenen Merkmale gelöst. Vorteilhafte Ausgestaltungen der Erfindung sind in den Unteransprüchen, der Beschreibung sowie der Zeichnung angegeben.

Grundgedanke der vorliegenden Erfindung ist es, die für die Sauerstoffzufuhr der Brennstoffzellen erforderliche Luftströmung nicht in einem offenen, sondern in einem teilgeschlossenen Kreislauf zu führen, damit die für den stabilen Betrieb der Zelle erforderliche Feuchtigkeit erhalten bleibt und nicht mit der Luftströmung abgeführt wird. Darüber hinaus wird die Luftströmung in der Anordnung so geführt, dass sich stets eine Strömung von außen nach innen einstellt. Letzteres ist deshalb besonders günstig, weil üblicherweise die Temperatur im Inneren der Anordnung höher ist als an der Außenseite, wo die Anordnung auch Wärme an die Umgebung abgibt. Bei dieser Strömungsführung ist dann sichergestellt, dass Kondensationsprobleme, insbesondere im Inneren der Anordnung, verhindert werden. Die Feuchte der durchströmenden Luft ist stets am Austritt am höchsten. Wenn, wie bei der vorliegenden Erfindung, strömungstechnisch dafür Sorge getragen ist, dass auch am Austritt die Temperatur am höchsten ist, kann eine Kondensation des Wasserdampfs in diesem Bereich zuverlässig verhindert werden. Die Erfindung erlaubt es somit, den Luftkreislauf hochgesättigt mit Wasser zu fahren und damit die Zelle mit hoher Standichte zu betreiben, verhindert jedoch zuverlässig die bei hoher Sättigung sonst auftretenden Kondensationsprobleme. Darüber hinaus erlaubt die erfindungsgemäße Anordnung eine besonders kompakte und somit platzsparende Bauart.

Die Luftumwälzung kann dann zentral über einen gemeinsamen Lüfter erfolgen, der im Bereich dieses Freiraums angeschlossen ist und die nach innen ausströmende feuchtigkeitsgesättigte Luft über Kanäle wieder an die Außenseite der Stacks fördert. Hierzu kann beispielsweise ein Kanalanschluss an einer Seite des zwischen den Brennstoffzellenstapeln gebildeten Freiraums vorgesehen sein, beispielsweise an der Oberseite.

Unter teilgeschlossenem Kreislauf im Sinne der Erfindung ist zu verstehen, dass der Luftstrom weitgehend geschlossen umgewälzt wird. Vollständig geschlossen darf das System nicht sein, da stets ein gewisser Frischluftanteil zuzuführen ist, um die notwendige Sauerstoffversorgung der Zellen zu gewährleisten. Hierzu sieht die Erfindung einen Einlass für Frischluft und einen Auslass für verbrauchte Luft vor, die vorzugsweise ebenfalls in diesen zwischen den Brennstoffzellenstapeln gebildeten Freiraum münden. Dabei kann die Menge der zugemischten Frischluft und entsprechend der abgeführten verbrauchten Luft durch die Kanalquerschnitte bestimmt werden. Vorteilhaft ist jedoch in dem Frischluftkanal ein Lüfter vorgesehen, der beispielsweise in eine elektronische Regelung einbindbar ist, welche dafür sorgt, dass stets ausreichend Frischluft zugeführt wird, jedoch nur soviel wie notwendig. Der Austritt der verbrauchten Luft über die Abluftöffnung erfolgt selbsttätig, wenn mittels des Lüfters Frischluft zugeführt wird.

Um möglichst wenig Energie für die Luftumwälzung einzusetzen, ist es erstrebenswert, im gesamten Kreislaufsystem möglichst laminare Strömungsverhältnisse zu schaffen. Allerdings hat sich gezeigt, dass die Luftzufuhr nicht an allen Stellen der Brennstoffzellen gleichmäßig erfolgt. Um dies zu verbessern und die Strömung innerhalb der Zellen besser steuern zu können, sieht die Erfindung in einer Weiterbildung Drosselstellen innerhalb des Umluftkanals vor. Hierdurch wird zwar der Strömungswiderstand innerhalb des Umluftkanals gezielt vergrößert, doch kann dadurch die Strömung besser gesteuert werden. Insbesondere kann bei geeigneter Wahl von Anzahl und Größe der Drosselstellen die Umluftströmung gezielt so verteilt werden, dass eine möglichst optimale Durchströmung und damit eine möglichst gleichmäßige Energieausbeute über die Fläche erfolgt.

Zweckmäßigerweise werden die Drosselstellen durch Kanalverengungen in den Luftkanälen der Brennstoffzellen gebildet. Hierzu können die Bipolarplatten luftseitig entsprechend ausgebildet sein, wobei es beispielsweise zweckmäßig ist, die Verengungen im Randbereich stärker auszubilden als in der Mitte, um im Randbereich eine geringere Durchströmung und damit eine geringere Abkühlung und damit einen gleichmäßigeren Temperaturverlauf über die gesamte Zellenfläche zu erreichen.

Besonders vorteilhaft ist es, die Kanalverengungen einströmseitig in jeder Bipolarplatte bzw. der Endplatte vorzusehen, da bei dieser Anordnung sich keine toten Zonen innerhalb der Zelle bilden, wo mit besonderen Kondensationsproblemen gerechnet werden muss.

Die Erfindung ist nachfolgend anhand eines in der Zeichnung dargestellten Ausführungsbeispiels näher erläutert. Es zeigen:
- Fig. 1: in stark vereinfachter Darstellung eine Brennstoffzellenanordnung gemäß der Erfindung in perspektivischer und teilgeschnittener Darstellung,
- Fig. 2: in perspektivischer Darstellung den luftseitigen Teil einer Bipolarplatte und
- Fig. 3: eine Draufsicht auf die Bipolarplatte gemäß Fig. 2 in Richtung des Pfeils III.

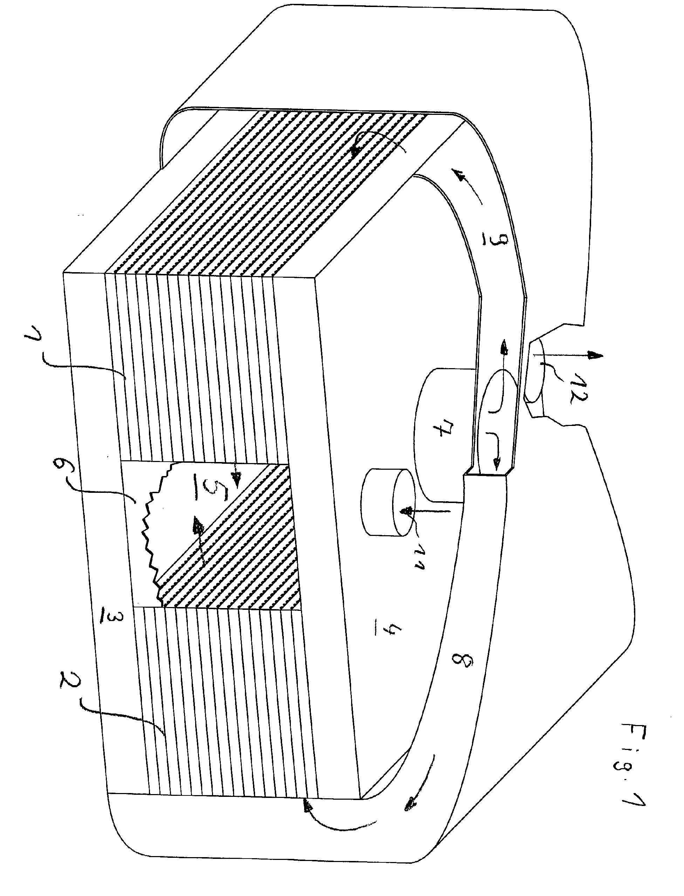

Das in Fig. 1 dargestellte Brennstoffzellenaggregat besteht aus zwei Brennstoffzellenstapeln 1 und 2 der PEM-Bauart. Die Brennstoffzellenstapel 1 und 2 sind zwischen zwei Trägerplatten 3 und 4 eingespannt.

Der Aufbau der Brennstoffzellenstapel entspricht dem Stand der Technik, wie einleitend beschrieben, ebenso die Kanalführung für die Brennstoffzufuhr, weshalb darauf verzichtet wird, diese hier im Einzelnen zu beschreiben.

Die Brennstoffzellenstapel 1 und 2 sind mit Abstand gegenüberliegend angeordnet, so dass sich dazwischen ein Freiraum 5 ergibt, der durch seitliche Wände 6 abgeschlossen ist.

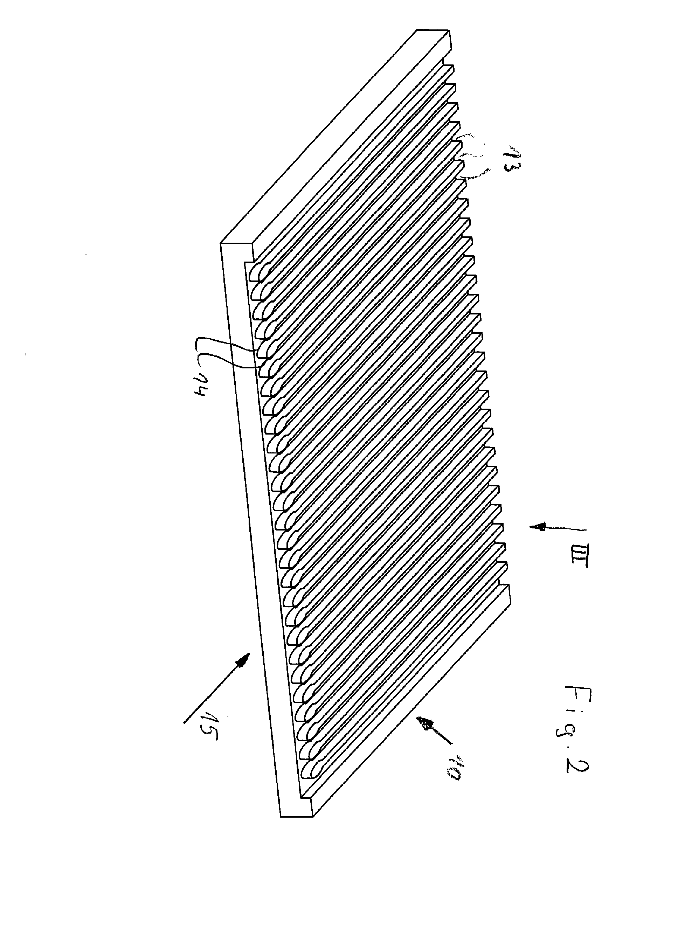

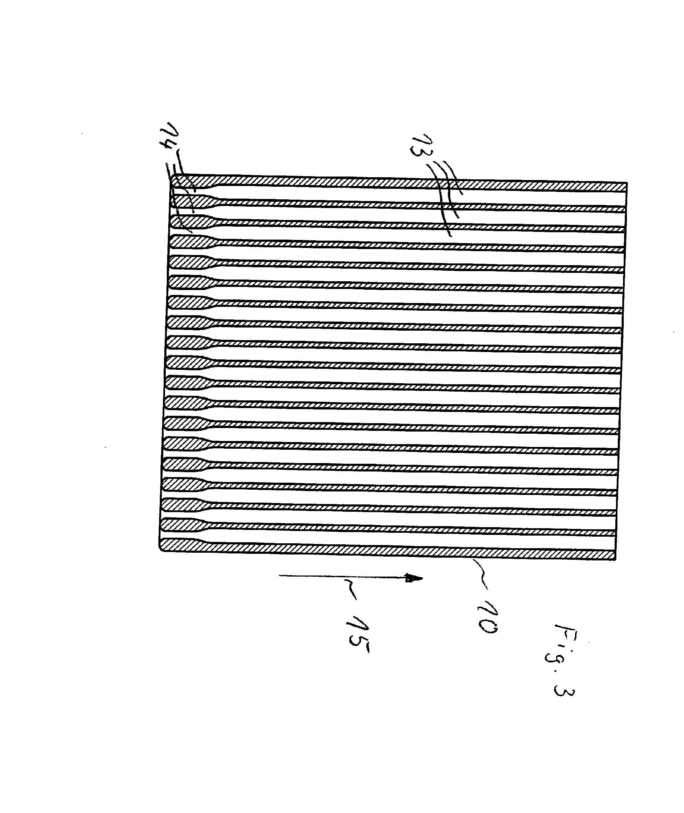

In der oberen Trägerplatte 4 befindet sich ein zentraler Anschluss 7, in den ein (nicht dargestellter) Lüfter integriert ist. Der Anschluss 7 mündet außen in zwei Kanäle 8 und 9, welche die vom Lüfter aus dem Freiraum 5 abgesaugte Luft zu den Außenseiten der Brennstoffzellenstapel 1 und 2 leiten. Die zur Sauerstoffversorgung der Brennstoffzellen erforderliche Luft wird also mittels des im Anschluss 7 angeordneten Lüfters durch die Kanäle 8 und 9 den Außenseiten der Brennstoffzellenstapel 1 und 2 zugeführt, wo sie in parallele Kanäle von anhand der Figuren 2 und 3 dargestellten Bipolarplatten 10 bzw. Endplatten eindringt, die Brennstoffzellenstapel 1 und 2 durchströmt, um im Freiraum 5 zwischen den Brennstoffzellenstapeln 1 und 2 wieder auszutreten.

Dieser vorbeschriebene Kreislauf ist jedoch nicht vollständig geschlossen, sondern nur teilgeschlossen, da ein Teil der umgewälzten Luft durch Frischluft zu ersetzen ist, um den erforderlichen Sauerstoff zuzuführen.

Hierzu weist das Aggregat in der oberen Trägerplatte 4 einen Frischluftanschluss 11 sowie einen Abluftanschluss 12 auf, die beide neben dem Anschluss 7 innerhalb des Freiraums 5 münden. Innerhalb des Frischluftanschlusses 11 ist ein (nicht dargestellter) Lüfter vorgesehen, der bei Sauerstoffbedarf gezielt angesteuert wird, um Frischluft in den sonst geschlossenen Umluftkreislauf zu leiten. Der Abluftanschluss 12 ist offen, kann aber auch ein Rückschlagventil, einen Filter, eine Rückschlagklappe oder dergleichen aufweisen, so dass stets dann, wenn mittels des Lüfters Frischluft in das System eingeblasen wird, eine entsprechende Menge Abluft über den Anschluss 12 entweicht. Die Steuerung des Lüfters für Frischluft kann beispielsweise anhand der elektrischen Daten des Aggregats erfolgen oder auch gezielt mittels Sensorik, welche den Sauerstoffgehalt und/oder Wasserdampfgehalt des Umluftstromes bestimmt.

Die Bipolarplatte 10, deren Kanaleinlässe vom Brennstoffzellenstapel 1 und deren Kanalauslässe vom Brennstoffzellenstapel 2 in Fig. 1 teilweise sichtbar sind, ist in Fig. 2 nur soweit dargestellt, wie es den luftseitigen Teil angeht. Die in Fig. 2 nicht sichtbare Unterseite trägt entweder in an sich bekannter Weise ein mäanderförmig über die Plattenfläche verlaufendes Kanalnetz für die Brennstoffzufuhr oder es kann jedoch eine Bipolarplatte auch so ausgebildet sein, dass sich zwischen dem Kanalnetz für den Brennstoff auf der einen Seite und für den Sauerstoff bzw. die Luft auf der anderen Seite noch Kühlkanäle vorgesehen sind, sei es zur Wasser- oder zur Luftkühlung. Da sich die vorstehende Erfindung ausschließlich auf die Luftführung bezieht, sind auch nur diese Details der Bipolarplatte 10 dargestellt.

Eine Bipolarplatte 10 weist eine Vielzahl von parallel laufenden Kanälen 13 auf, die gemäß Fig. 2 nach oben offen sind, im Zellenstapel jedoch durch eine Gasdiffusionselektrode abgeschlossen sind, über welche der in der Luft befindliche Sauerstoff dem Katalysator zugefügt wird, an dem die durch die Polymerelektrolytmembran durchtretenden Wasserstoffionen oxidiert werden.

Diese Kanäle 13, die in dem Aggregat nach Fig. 1 in jedem Brennstoffzellenstapel 1, 2 von außen nach innen, also zum Freiraum 5 hin verlaufen, sind im Unterschied zum Stand der Technik nicht mit konstantem Querschnitt ausgebildet, sondern weisen eine Verengung 14 auf, welche stetig vom Kanaleingang ausgeformt ist, so dass sich eine möglichst laminare Strömung auch im Bereich dieser Verengung ausbilden kann. Die Durchströmungsrichtung ist mit 15 gekennzeichnet. Die Verengungen sind anströmseitig angeordnet, können jedoch auch an anderen Stelle des Kanals 13 liegen. Zwar sind in der Darstellung nach Fig. 3 die Verengungen 14 gleichgroß ausgebildet, doch können diese auch variieren, sei es zum Erhalt einer gleichmäßigen Sauerstoffversorgung über die Fläche und/oder auch um einen gleichmäßigen Temperaturverlauf über die Fläche zu erreichen. So werden bevorzugt die in Fig. 3 äußeren Kanäle eine stärkere Verengung aufweisen als die inneren damit die in diesem Bereich üblicherweise durch die Umgebung erfolgende höhere Kühlung kompensiert wird.

Zwar ist in der dargestellten Ausführungsform die verengte Stelle anströmseitig der Platte vorgesehen, diese kann jedoch auch abströmseitig oder auch in der Mitte angeordnet sein. Eine Bipolarplatte der vorbeschriebenen Form kann als Spritzgussteil kostengünstig hergestellt werden, wobei vorzugsweise ein Kunststoff mit einem hohen Kohlenstoffgehalt eingesetzt wird. Wenn die Bipolarplatte ein gesondertes Kanalnetz beispielsweise zur Flüssigkeitskühlung aufweisen soll, wie es das anhand von Fig. 1 beschriebene Aggregat aufweist, dann ist es zweckmäßig, eine solche Platte zweiteilig auszubilden, dann können beide Plattenteile als Spritzgussteile ausgebildet werden und die innerhalb der (zusammengesetzten) Platte liegenden Kanäle für das Kühlmedium auf diese Weise kostengünstig geformt werden.

Das vorstehend beschriebene Aggregat hat eine Nennleistung von etwa 2 kW, besteht aus zwei Brennstoffzellenstapeln 1 und 2 von je 17 Zellen, wobei die Zellen nicht nur stapelweise, sondern auch die Stapel selbst in Reihe geschaltet sind. Das Aggregat kann auf diese Weise sehr kompakt ausgebildet sein und hat beispielsweise Außenabmessungen von 40 cm x 30 cm x 15 cm. Alternativ können statt der Verengungen 14 in den Kanälen 13 auch Drosselstellen in den Kanälen 8 und 9 vorgesehen sein, beispielsweise in Form von Stau- oder Lochblechen.

### Bezugszeichenliste

- 1 -: Brennstoffzellenstapel, links
- 2 -: Brennstoffzellenstapel, rechts
- 3 -: Trägerplatte, unten
- 4 -: Trägerplatte, oben
- 5 -: Freiraum
- 6 -: Wände
- 7 -: Anschluss
- 8 -: Kanal, rechts
- 9 -: Kanal, links
- 10 -: Bipolarplatte
- 11 -: Frischluftanschluss
- 12 -: Abluftanschluss
- 13 -: Kanäle
- 14 -: Verengungen
- 15 -: Durchströmungsrichtung

## Patentansprüche

1. Brennstoffzellenanordnung, bei der mindestens zwei aus Brennstoffzellen der PEM-Bauart gebildete Brennstoffzellenstapel (1, 2) mit Abstand zueinander angeordnet sind und Mittel vorgesehen sind, welche die für die Sauerstoffzufuhr erforderliche Luft durch die Brennstoffzellenstapel führen, **dadurch gekennzeichnet, dass** die Luftströmung innerhalb der Anordnung in einem teilgeschlossenen Kreislauf und so geführt ist, dass die aus den Stapeln (1, 2) ausströmende Luft in den zwischen den Stapeln (1, 2) gebildeten Freiraum (5) strömt.

2. Brennstoffzellenanordnung nach Anspruch 1, **dadurch gekennzeichnet, dass** zwei Brennstoffzellenstapel (1, 2) mit Abstand gegenüberliegend angeordnet sind, dass Luftkanäle (8, 9) vorgesehen sind, welche die nach innen aus den Stapeln (1, 2) ausströmende Luft zu den außenliegenden Einströmseiten führt und dass mindestens ein Lüfter zur Umwälzung der Luft durch die Stapel (1, 2) und die Kanäle (8, 9) vorgesehen ist.

3. Brennstoffzellenanordnung nach einem der vorhergehenden Ansprüche, **dadurch gekennzeichnet, dass** der zwischen den Brennstoffzellenstapeln (1, 2) gebildete Raum (5) an mindestens einer Seite, vorzugsweise an der Oberseite einen Kanalanschluss (7) für die umzuwälzende Luft aufweist.

4. Brennstoffzellenanordnung nach einem der vorhergehenden Ansprüche, **dadurch gekennzeichnet, dass** der zwischen den Brennstoffzellenstapeln (1, 2) gebildete Raum (5) an mindestens einer Seite, vorzugsweise an der Oberseite, einen Einlass (11) für Frischluft und einen Auslass (12) für verbrauchte Luft aufweist.

5. Brennstoffzellenanordnung nach einem der vorhergehenden Ansprüche, **dadurch gekennzeichnet, dass** im Bereich des Frischlufteinlasses (11) ein Lüfter vorgesehen ist.

6. Brennstoffzellenanordnung nach einem der vorhergehenden Ansprüche, **dadurch gekennzeichnet, dass** innerhalb des Umluftkanals (8, 9) Drosselstellen vorgesehen sind.

7. Brennstoffzellenanordnung nach einem der vorhergehenden Ansprüche, **dadurch gekennzeichnet, dass** die Drosselstellen (14) durch Kanalverengungen in den Luftkanälen (13) der Brennstoffzellen gebildet sind.

8. Brennstoffzellenanordnung nach einem der vorhergehenden Ansprüche, **dadurch gekennzeichnet, dass** die Kanalverengungen (14) einströmseitig vorgesehen sind.

9. Bipolarplatte für eine Brennstoffzelle der PEM-Bauart mit mehreren zu einer Seite offenen Kanälen (13) für die Durchströmung mit einem sauerstoffhaltigen Gas, **dadurch gekennzeichnet, dass** die Kanäle Querschnittsverengungen (14) aufweisen.

10. Bipolarplatte nach Anspruch 9, **dadurch gekennzeichnet, dass** die Größe der Querschnittsverengung in Abhängigkeit der Lage des Kanals zum Rand hin zunimmt.
